# EUROPEAN PATENT APPLICATION

(11) **EP 4 668 437 A1**
(43) Date of publication of application: **24.12.2025**
(21) Application number: 24756905.6
(22) Date of filing: 14.02.2024
(51) Int. Cl.: H01M 50/242, H01M 10/613, H01M 10/647, H01M 10/658, H01M 50/204, H01M 50/291

(54) **BATTERY CUSHIONING STRUCTURE**

(30) Priority: 16.02.2023 JP 2023022778
(71) Applicant: NOK Corporation, Minato-ku, Tokyo 105-8585 (JP)
(72) Inventor: XU, Fangman, Fujisawa-shi, Kanagawa 251-0042 (JP); KARUBE, Shotaro, Fujisawa-shi, Kanagawa 251-0042 (JP); OYAMA, Takayuki, Fujisawa-shi, Kanagawa 251-0042 (JP); YAMASAKI, Shunji, Fujisawa-shi, Kanagawa 251-0042 (JP); HIGUCHI, Keita, Fujisawa-shi, Kanagawa 251-0042 (JP)
(74) Representative: TBK
(86) International application number: PCT/JP2024/004981
(87) International publication number: WO 2024/172064

(57) **Abstract**

A battery cushioning structure that can improve a cushioning function is provided. A battery cushioning structure 100 includes a cushioning sheet 100 and interposing members 210, 220 disposed between the cushioning sheet 100 and a battery component. The cushioning sheet 100 includes protruding portions 120a, 120b that protrude toward the interposing members 210, 220.

## Description

### [Technical Field]

The present invention relates to a battery cushioning structure.

### [Background Art]

In a battery configured as a cell stack in which a plurality of cells are stacked, quality may deteriorate due to expansion and contraction of the cells. For example, in a case of lithium-ion batteries, cells expand and contract during charging and discharging, and if no measures are taken, the electrode particles will be subjected to load, causing them to break down and shortening a lifespan of the battery. In addition, in a case of solid-state batteries, it is known that variations in surface pressure caused by expansion and contraction lead to variations in performance and also affect the lifespan. In view of this, technology is known in which a cushioning member is provided between adjacent cells or between a cell and a housing or a support member in order to reduce stress on the cells.

In a case where the cushioning member is a flat plate-shaped member, when the cushioning member is compressed, a reaction force becomes suddenly large even at a low compression rate, and a sufficient cushioning effect cannot be obtained. Furthermore, in a case of a cushioning member having a plurality of protruding portions provided on a flat plate-shaped member, stress is concentrated at portions where the protruding portions come into contact, which may result in a decrease in battery performance. Thus, there is still room for improvement.

For example, in a case of lithium-ion batteries, when a particular cell begins to generate a high amount of heat for some reason, this can cause an increase in an amount of heat generated by other cells, raising concerns that thermal runaway may occur, so technology is known that provides a heat insulating function to a cushioning member.

### [Citation List]

### [Patent Literature]

[PTL 1] Japanese Patent Application Publication No. 2020-4556

### [Summary of Invention]

### [Technical Problem]

The present invention provides a battery cushioning structure that can improve the cushioning function.

### [Solution to Problem]

The present invention employs following means to solve the above problem.

That is, the present invention is a battery cushioning structure including:
a cushioning sheet; and
a heat insulating member disposed between the cushioning sheet and a battery component,
wherein the cushioning sheet includes a protruding portion that protrudes toward the heat insulating member.

According to the present invention, since the heat insulating member is provided between the cushioning sheet and the battery component (cell, housing, support member, or the like), stress due to the protruding portion provided on the cushioning sheet is dispersed by the heat insulating member. This makes it possible to suppress concentration of stress on the battery component due to the protruding portion. In addition, in the present invention, since the heat insulating member is disposed between the cushioning sheet and the battery component, transfer of heat can be suppressed.

In addition, another aspect of the present invention is a battery cushioning structure including:
a cushioning sheet; and
an interposing member,
wherein the cushioning sheet includes a protruding portion protruding toward the interposing member, and the interposing member has a stress dispersion function for dispersing stress caused by the protruding portion.

According to the present invention, the interposing member having a stress dispersion function for dispersing the stress caused by the protruding portion can suppress concentration of stress on the battery component due to the protruding portion.

Furthermore, still another aspect of the present invention is a battery cushioning structure including:
a cushioning sheet; and
an interposing member,
wherein the cushioning sheet includes a protruding portion protruding toward an opposite side to the interposing member, and
wherein, when the battery cushioning structure is compressed until a maximum thickness, in a state where no external force acts on the battery cushioning structure, of the cushioning sheet in a protruding direction of the protruding portion is halved, a back side of a most distal end of the protruding portion does not come into contact with the interposing member and a space is maintained between the protruding portion and the interposing member.

According to the present invention, even when the battery cushioning structure is compressed until the maximum thickness of the cushioning sheet in the protruding direction of the protruding portion is halved, a space is maintained between the protruding portion and the interposing member, thereby preventing a sudden increase in a repulsive force due to the battery cushioning structure. In addition, air in the space helps maintain the heat insulating function.

A plurality of the protruding portions may be provided on each of both sides of the cushioning sheet.

The protruding portions provided on one surface of the cushioning sheet and the protruding portions provided on the other surface of the cushioning sheet may be arranged alternately in rows and columns.

A height of the protruding portion provided on one surface of the cushioning sheet may be the same as a height of the protruding portion provided on the other surface of the cushioning sheet.

This ensures that both sides of the battery cushioning structure have the same functionality, eliminating need to check the front and back when installing the battery cushioning structure.

A maximum thickness of the cushioning sheet in a protruding direction of the protruding portion may be more than three times a thickness of the cushioning sheet.

An area enclosed by outline of a cross section perpendicular to a protruding direction of the protruding portion may become gradually narrower toward a tip in the protruding direction.

This allows a volume inside a hollow portion to be large to suppress a sudden increase in elastic repulsive force and makes it easier to maintain a space even when the cushioning sheet is compressed, while reducing an area of the tip of the protruding portion. Therefore, a contact area between the protruding portion and a member with which the protruding portion comes into contact is reduced, making it possible to suppress heat transfer.

The cushioning sheet and the heat insulating member (interposing member) are integrated together.

The above-described configuration may be combined as much as possible.

### [Advantageous Effects of Invention]

As described above, according to the present invention, the cushioning function is improved.

### [Brief Description of Drawings]

[Fig. 1]

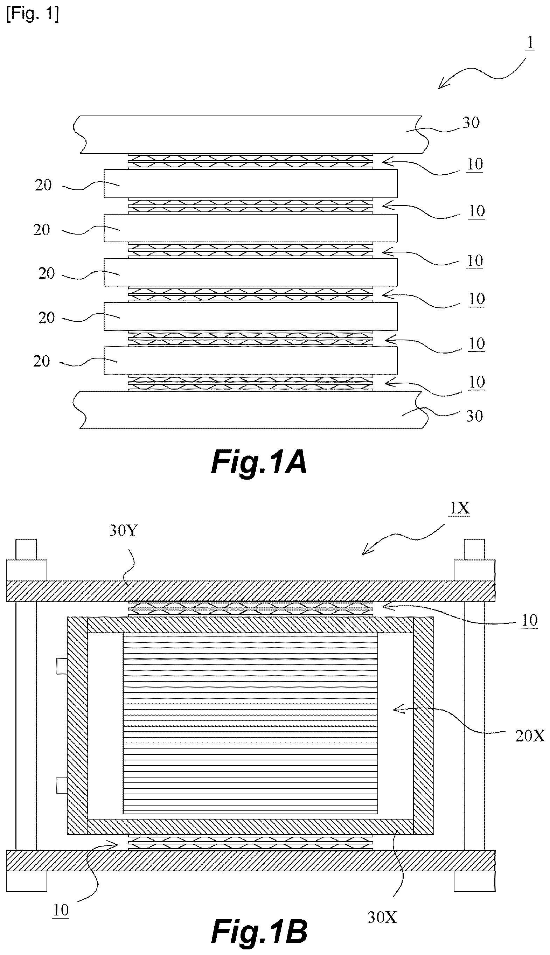

   Fig. 1 is a schematic diagram of a battery using a battery cushioning structure according to an embodiment 1 of the present invention.
[Fig. 2]

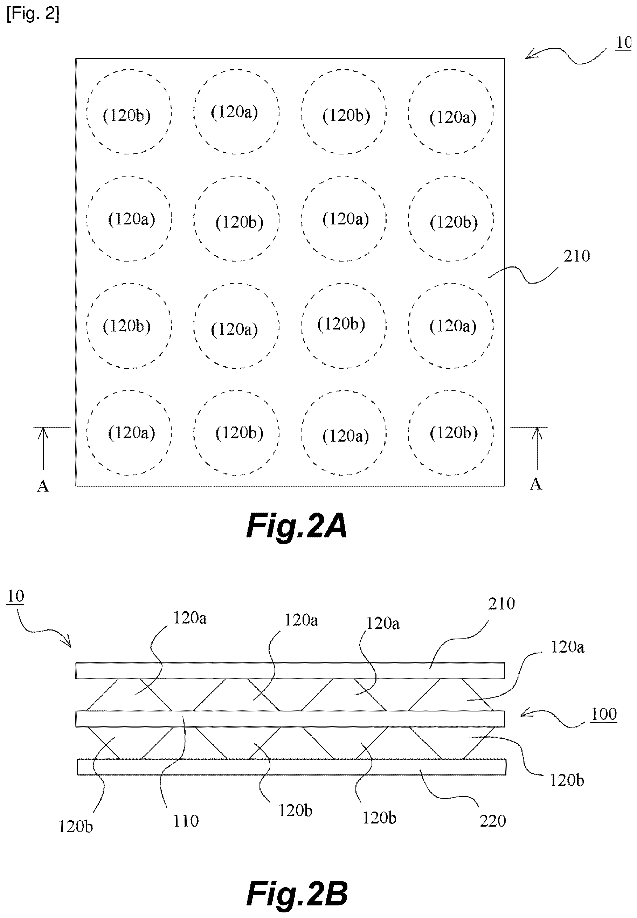

   Fig. 2 is an external view of the battery cushioning structure according to the embodiment 1 of the present invention.
[Fig. 3]

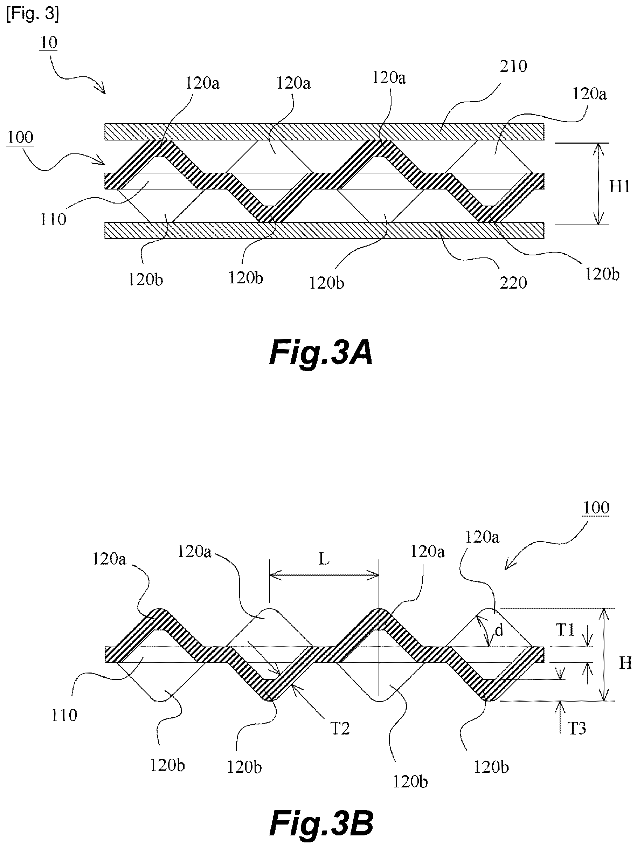

   Fig. 3 is a schematic cross-sectional view of the battery cushioning structure according to the embodiment 1 of the present invention.
[Fig. 4]

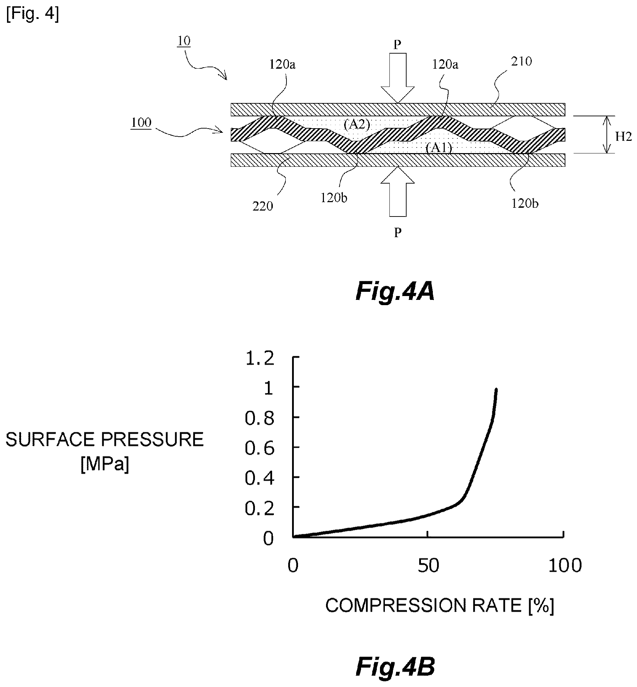

   Fig. 4 is an explanatory diagram of an operation of the battery cushioning structure according to the embodiment 1 of the present invention.
[Fig. 5]

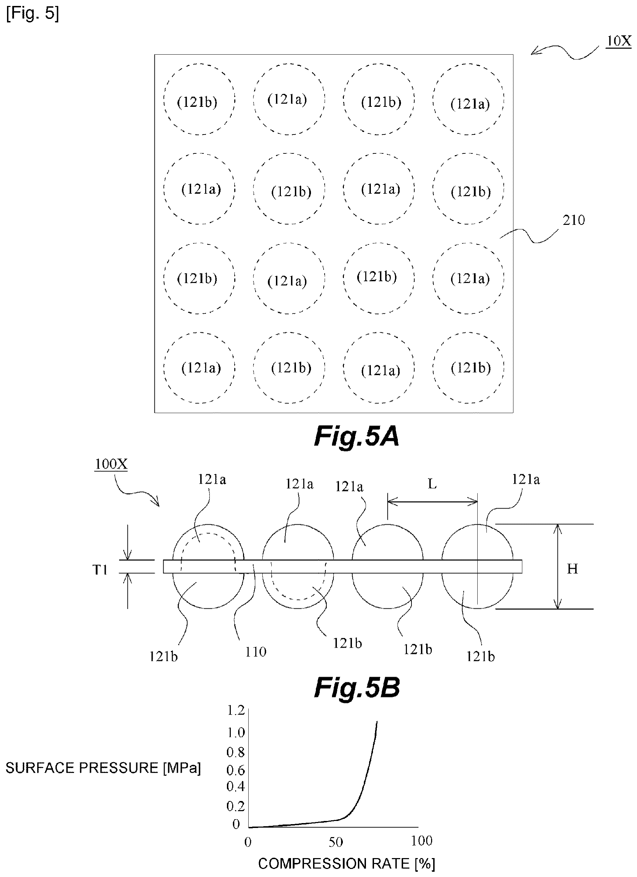

   Fig. 5 is an explanatory diagram of a battery cushioning structure according to an embodiment 2 of the present invention.
[Fig. 6]

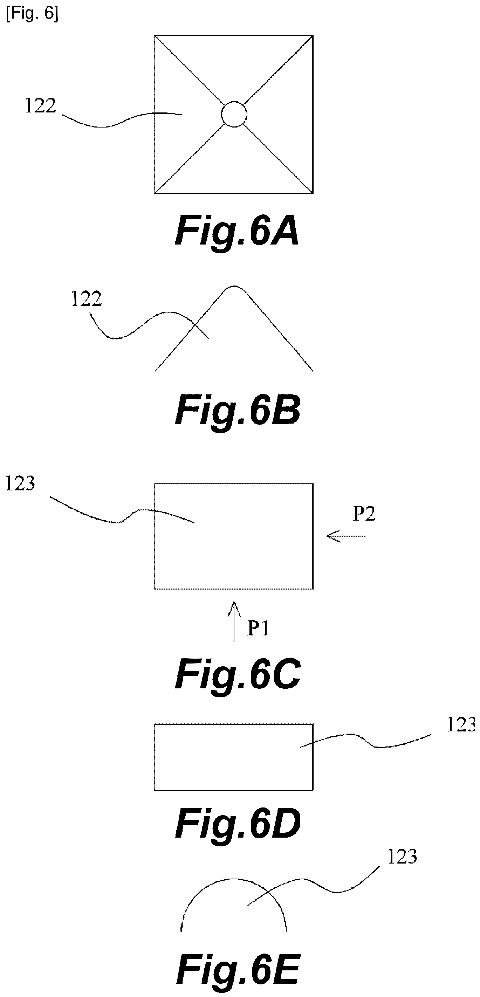

   Fig. 6 is a diagram illustrating various examples of protruding portions according to the present invention.

### [Description of Embodiments]

Hereinafter, with reference to the drawings, embodiments of the present invention will be described in detail based on embodiments. However, dimensions, materials, shapes, relative arrangements, and the like of component parts described in these embodiments are not intended to limit the scope of the present invention to those unless otherwise specified.

### (Embodiment 1)

A battery cushioning structure according to an embodiment 1 of the present invention will be described with reference to Fig. 1 to Fig. 4. Fig. 1 is a schematic diagram of a battery using the battery cushioning structure according to the embodiment 1 of the present invention. Fig. 2 is an external view of the battery cushioning structure according to the embodiment 1 of the present invention, where Fig. 2A is a plan view of the battery cushioning structure, and Fig. 2B is a side view of the battery cushioning structure. Fig. 3 is a schematic cross-sectional view of the battery cushioning structure according to the embodiment 1 of the present invention, where Fig. 3A is a cross-sectional view taken along a line A-A in Fig. 2A, and Fig. 3B is a schematic cross-sectional view of a cushioning sheet alone. Fig. 4 is an explanatory diagram of an operation of the battery cushioning structure according to the embodiment 1 of the present invention, where Fig. 4A is a schematic cross-sectional view illustrating a state in which a compressive force is acting on the battery cushioning structure, and Fig. 4B is a graph illustrating a relationship between a compression rate and a surface pressure.

### <Battery>

An example of a battery to which the battery cushioning structure according to this embodiment can be applied will be described with particular reference to Fig. 1. Here, a lithium-ion battery will be used as an example. A battery 1 is composed of a cell stack in which a plurality of cells 20 are stacked, and the cell stack is supported by a housing (case wall surface) that accommodates the cell stack, support members for supporting the cell stack, and the like. In Fig. 1A, a part of a housing (or a support member) 30 is illustrated.

In the battery 1, in order to suppress stress acting on the cells 20 due to expansion and contraction of the cells 20 during charging and discharging, a battery cushioning structure 10 is provided between adjacent cells 20 and between the cell 20 and the housing (or support member) 30. The battery cushioning structure 10 may be provided for each single cell 20, or the battery cushioning structure 10 may be provided for each of a plurality of cells 20. In addition, a plurality of the battery cushioning structures 10 can be stacked between adjacent cells 20 and between the cell 20 and the housing (or support member) 30.

In a battery 1X illustrated in Fig. 1B, a cell stack 20X is accommodated inside a housing 30X. The housing 30X is supported by a pair of support members 30Y. In this illustrated example, the battery cushioning structure 10 is provided between the housing 30X and the support member 30Y. Although not specifically illustrated, a battery cushioning structure can also be provided between adjacent cells in the cell stack 20X.

With the battery 1 configured as described above, even when a compressive force acts on the cell 20 when the cell 20 expands, the battery cushioning structure 10 can suppress stress on the cell 20. Furthermore, in the case of a lithium-ion battery, measures against thermal runaway are necessary, so the battery cushioning structure 10 is configured to have a heat insulating function.

### <Battery Cushioning Structure>

The battery cushioning structure 10 will be described in detail. The battery cushioning structure 10 includes a cushioning sheet 100, and interposing members 210, 220 disposed between the cushioning sheet 100 and battery components (such as the cells 20 and the housing (or support member) 30). As in the example illustrated in Fig. 1B above, the interposing members 210, 220 are not limited to a configuration in which they directly contact the battery components as long as they are provided between the cushioning sheet 100 and the battery components.

The cushioning sheet 100 is made of an elastic body. It is preferable to adopt a material for the elastic body, the hardness of which, as measured by JIS K 6253 durometer type E, is 50 degrees to 90 degrees (more preferably 60 degrees to 80 degrees). This allows a cushioning function to be exhibited optimally. More specifically, EPDM, silicone rubber, or the like may be adopted.

When the cushioning sheet 100 and the interposing members 210, 220 can be positioned by incorporating the cushioning sheet 100 and the interposing members 210, 220 into the housing (or support member) 30 or the like, a structure for fixing the cushioning sheet 100 and the interposing members 210, 220 is not required. However, when positioning is not possible, it is necessary to provide a structure for fixing the cushioning sheet 100 and the interposing members 210, 220 together. For example, a structure can be adopted in which the cushioning sheet 100 and the interposing members 210, 220 are adhered to each other using double-sided tape, or any other suitable known technology can be adopted, such as positioning the cushioning sheet 100 and the interposing members 210, 220 by accommodating them in a bag-shaped film. In order to position the cushioning sheet 100 and the battery components, a configuration in which they are adhered to each other with double-sided tape may also be adopted. The battery components may be provided with structures for positioning the cushioning sheet 100 and the interposing members 210, 220.

In order to provide the battery cushioning structure 10 with a heat insulating function, it is desirable that both the cushioning sheet 100 and the interposing members 210, 220 be made of a material having heat insulating properties. However, when the required heat insulating effect can be obtained by providing a heat insulating function to either the cushioning sheet 100 or the interposing members 210, 220 depending on conditions of use, or the like, the other member can also be made of a material that does not have heat insulating properties. In a case where the cushioning sheet 100 is to be configured to have a heat insulating function, the cushioning sheet 100 can be made of an elastic material having high heat insulating properties, such as flame-retardant rubber or flame-retardant elastomer. In a case where the interposing members 210, 220 are to be configured to have a heat insulating function, they can be made of thin, non-combustible boards whose main component is the non-asbestos natural mineral magnesium silicate. In a case where the interposing members 210, 220 are to be configured to have a heat insulating function, it can be said that the interposing members 210, 220 are heat insulating members. It is preferable that the interposing members 210, 220 are made of sheet-like (thin plate-like) members so that an overall thickness of the battery cushioning structure 10 does not become extremely thick. As illustrated in the drawings, the interposing members 210, 220 according to this embodiment are made of sheet-like members.

The cushioning sheet 100 includes a plurality of protruding portions 120a and 120b. These protruding portions 120a, 120b are configured so as to have a hollow interior, and a space within the hollow is configured so as to be opened (open) on a side opposite to a protruding direction of the protruding portions. In other words, the cushioning sheet 100 includes a plurality of protruding portions 120a, 120b that are hollow and open on the side opposite to the protruding direction.

As illustrated in Fig. 2, a plurality of protruding portions 120a and a plurality of protruding portions 120b are provided on each of both sides of the cushioning sheet 100. In Fig. 2A, in order to make arrangement of the protruding portions 120a, 120b easier to understand, their contours are illustrated by dotted lines in a see-through manner. As illustrated in the drawing, the protruding portions 120a provided on one surface of the cushioning sheet 100 and the protruding portions 120b provided on the other surface of the cushioning sheet 100 are arranged alternately in rows and columns. A height of the protruding portion 120a and a height of the protruding portion 120b are configured to be the same. As a result, functions of both sides of the battery cushioning structure 10 are equal, so there is no need to check the front and back when installing the battery cushioning structure 10. The plan view illustrated in Fig. 2A merely illustrates one example of the arrangement of the protruding portions 120a, 120b, and the number and arrangement of the protruding portions 120a, 120b can be appropriately set depending on dimensions of the cushioning sheet 100, or the like. In addition, in the illustrated example, the protruding portions 120a, 120b are arranged alternately parallel or perpendicular to four side surfaces of the cushioning sheet 100, but the protruding portions 120a, 120b may also be configured to be arranged alternately diagonally to the above-mentioned four side surfaces.

Here, the protruding portion 120a protrudes toward the interposing member 210 and can be said to be a hollow protruding portion with the side opposite to the protruding direction being open. In addition, this protruding portion 120a protrudes toward an opposite side to the interposing member 220 and can be said to be a hollow protruding portion with a side near the interposing member 220 being open.

The protruding portion 120b protrudes toward the interposing member 220 and can be said to be a hollow protruding portion with the side opposite to the protruding direction being open. In addition, this protruding portion 120b protrudes toward an opposite side to the interposing member 210 and can be said to be a hollow protruding portion with a side near the interposing member 210 being open.

A dimensional relationship between various parts of the battery cushioning structure 10 will be described with reference to Fig. 3. In Fig. 3A, H1 is a maximum thickness of the cushioning sheet 100 in the protruding direction of the protruding portion in a state where no external force is acting on the battery cushioning structure 10. Fig. 3B illustrates dimensions of each part of the cushioning sheet 100 in a state where no external force is applied. H is a maximum thickness of the cushioning sheet 100 in the protruding direction of the protruding portion, T1 is a thickness of a flat plate-shaped portion of the cushioning sheet 100, T2 is a thickness of a body portion of the protruding portions 120a, 120b, T3 is a thickness of most distal portions of the protruding portions 120a, 120b, L is a distance between most distal portions of adjacent protruding portions 120a and 120b, and d is an inclination angle of the body portion of the protruding portions 120a, 120b relative to the flat plate-shaped portion. These dimensions can be adjusted appropriately depending on the usage environment, or the like. T1, T2, and T3 may be set to be the same or different from each other.

For example, T1 can be set to about 0.1 mm to 10 mm. In order to fully exert a cushioning function, it is preferable to satisfy H > 3 × T (T1, T2, T3). Length and width (length and width when viewed in a plan view) of the cushioning sheet 100 may be equal to or slightly smaller than length and width of the cell 20. Furthermore, T2 can be set to about 0.1 mm to 10 mm. Density of the protruding portions 120a, 120b can be about 1 to 6 pieces/cm².

In this embodiment, when the battery cushioning structure 10 is compressed until the maximum thickness H1, in a state where no external force is acting on the battery cushioning structure 10, of the cushioning sheet 100 in the protruding direction of the protruding portion is halved, a back side of the most distal end of the protruding portion 120a does not come into contact with the interposing member 220, and a space is configured to be maintained between the protruding portion 120a and the interposing member 220. That is, as illustrated in Fig. 4A, even when an external force is applied in an arrow P direction to compress the battery cushioning structure 10 so that a compression rate of the protruding portion 120a becomes 50% (H2 = 0.5 × H1), the back side of the most distal end of the protruding portion 120a is configured not to come into contact with the interposing member 220. As a result, a space (for example, a region indicated by A1 in the drawing) is maintained between the protruding portion 120a and the interposing member 220. The same applies to the relationship between the protruding portion 120b and the interposing member 210. That is, even when the compression rate of the protruding portion 120b is 50%, a space (for example, a region indicated by A2 in the drawing) is maintained between the protruding portion 120b and the interposing member 210.

A specific example of how a space can be maintained behind the protruding portion even when the compression rate of the protruding portion is 50% will be described. The material adopted for the cushioning sheet 100 was EPDM having a hardness of Duro A75, an elongation of 250%, and a tensile strength of 6.8 MPa. The material properties of hardness are based on JIS standard JIS K6253, and the measurement conditions are durometer type A, and the material properties of elongation and tensile strength are based on JIS standard JIS K6251, and the measurement conditions are an elongation speed of 500 mm/min. The dimensions of each part were set as follows: H = 3.3 mm, T1 = 0.8 mm, T2 = 0.6 mm, T3 = 1 mm, L = 3.5 mm, and d = 40°. The interposing member 210 is a thin, non-combustible board having a thickness of 1.2 mm and a thermal conductivity of 0.2 W/mK, the main component of which is the non-asbestos natural mineral magnesium silicate. Fig. 4B is a graph illustrating a relationship between a compression rate of the protruding portions 120a, 120b and a surface pressure between the protruding portions 120a, 120b and the interposing members 210, 220 in this specific example. The measurement conditions for this graph are a temperature of 25°C and a compression speed of 0.1 mm/min. As can be seen from this graph, there is no sudden increase in surface pressure even when the compression rate exceeds 50%. When the surface pressure increases suddenly, it can be considered that the rear side of the most distal end of the protruding portion comes into contact with the interposing member, and the space disappears (almost disappears). From this, it can be seen that when a flat plate-shaped cushioning sheet is adopted, the surface pressure will rise rapidly even at a low compression rate. Furthermore, in a configuration in which a flat plate-shaped cushioning sheet is provided with a plurality of protruding portions that do not have hollow portions, the surface pressure does not increase in areas where there are no protruding portions, so the increase in a reaction force of the entire cushioning sheet can be suppressed, but it can also be seen that the surface pressure increases rapidly in areas where the protruding portions come into contact.

### <Advantages of Battery Cushioning Structure according to Present Embodiment>

According to the battery cushioning structure 10 of this embodiment, the interposing members 210, 220 are provided between the cushioning sheet 100 and the battery components (cells 20, housing 30, and the like). Therefore, the stress caused by the protruding portions 120a and 120b provided on the cushioning sheet 100 is dispersed by the interposing members 210, 220. In this manner, the interposing members 210, 220 according to this embodiment have a stress dispersion function for dispersing the stress caused by the protruding portions 120a, 120b. Note that, if the interposing members 210, 220 have a certain degree of rigidity, they have a stress dispersion function. This makes it possible to suppress the concentration of stress on the battery components due to the protruding portions 120a, 120b. Furthermore, since the protruding portions 120a, 120b are hollow and open on the side opposite to the protruding direction, even when compressed, a sudden increase in reaction force can be suppressed. This can improve the cushioning function. Therefore, stress load on the cells 20 or the like due to expansion and contraction of the cells 20 can be suppressed, and vibrations transmitted to the battery 1 can be absorbed. This makes it possible to stably maintain quality of the cells 20 and extend the lifespan of the battery 1.

Furthermore, in a case where the interposing members 210, 220 have a heat insulating function, even when the temperature of any of the cells 20 suddenly rises for some reason, transfer of heat can be suppressed.

Furthermore, in this embodiment, even when the battery cushioning structure 10 is compressed until the maximum thickness of the cushioning sheet 100 in the protruding direction of the protruding portion is reduced to half, a space is maintained between the protruding portion and the interposing member. Therefore, a repulsive force of the battery cushioning structure 10 can be prevented from increasing suddenly. In addition, the air in the space helps maintain the heat insulating function.

The protruding portions 120a, 120b according to this embodiment are configured so that the area enclosed by an outline of a cross section perpendicular to the protruding direction becomes gradually narrower toward a tip in the protruding direction. That is, an outer shape of the protruding portions 120a, 120b according to this embodiment is a substantially truncated cone shape with a tip of the cone being configured with a curved surface. Therefore, when the protruding portions 120a, 120b are cut on a plane perpendicular to the protruding direction, the outer shape is circular, and an area of the circle is gradually narrowed toward the tip in the protruding direction.

With this configuration, volume within the hollow portion of the protruding portions 120a, 120b can be increased to suppress a sudden increase in the elastic repulsive force and make it easier to maintain a space even when the cushioning sheet 100 is compressed, while the area of the tips of the protruding portions 120a, 120b can be reduced. Therefore, the contact area between the protruding portions 120a, 120b and the cells 20, the housing 30, and the like is reduced, making it possible to suppress heat transfer.

Here, the outer shape of the protruding portion is not limited to the substantially truncated cone shape described in the embodiment 1, and various other shapes may be adopted. In the embodiment 2, a case will be described in which the outer shape of the protruding portion is a hemispherical shape.

### (Embodiment 2)

Fig. 5 illustrates an embodiment 2 of the present invention. In this embodiment, a configuration in which the outer shape of the protruding portion is a hemisphere will be described. The other configurations and functions are the same as those of the embodiment 1, so the similar components are given the same reference numerals and the description thereof is omitted as appropriate.

Fig. 5 is an explanatory diagram of a battery cushioning structure according to the embodiment 2 of the present invention, where Fig. 5A is a plan view of the battery cushioning structure, Fig. 5B is a side view of the cushioning sheet, and Fig. 5C is a graph illustrating a relationship between a compression rate and a surface pressure.

A battery cushioning structure 10X according to this embodiment can be applied to the similar battery as in the embodiment 1, and therefore the description thereof will be omitted. The battery cushioning structure 10X is composed of a cushioning sheet 100X and interposing members 210, 220, similar to the embodiment 1. The interposing members 210, 220 are as described in the embodiment 1. In addition, in Fig. 5A, only the interposing member 210 is illustrated. The necessity for a structure for fixing the cushioning sheet 100X and the interposing members 210, 220, and the structure for fixing them are also as described in the embodiment 1. The configuration in the case where the battery cushioning structure 10X has a heat insulating function is also as described in the embodiment 1.

The cushioning sheet 100X according to this embodiment includes a plurality of protruding portions 121a, 121b. As in the embodiment 1, these protruding portions 121a, 121b are also configured to have a hollow interior, and a space within the hollow is configured to be opened (open) on a side opposite to the protruding direction of the protruding portion. In other words, the cushioning sheet 100 includes a plurality of protruding portions 121a, 121b that are hollow inside and open on the side opposite to the protruding direction. This embodiment differs from the embodiment 1 only in that outer shapes of the protruding portions 121a, 121b are hemispherical. In Fig. 5B, contours of the hollow portions in a leftmost protruding portion 121a and a second protruding portion 121b from the left are indicated by dotted lines. As illustrated in Fig. 5B, a plurality of protruding portions 121a and a plurality of protruding portions 121b are provided on both sides of the cushioning sheet 100X. In Fig. 5A, in order to make arrangement of the protruding portions 121a, 121b easier to understand, the contours thereof are illustrated by dotted lines in a see-through manner. As illustrated in the drawing, the protruding portions 121a provided on one surface of the cushioning sheet 100X and the protruding portions 121b provided on the other surface of the cushioning sheet 100X are arranged alternately in rows and columns. A height of the protruding portion 121a and a height of the protruding portion 121b are configured to be the same as in the embodiment 1. The plan view illustrated in Fig. 5A merely illustrates one example of the arrangement of the protruding portions 121a, 121b, and the number and arrangement of the protruding portions 121a, 121b can be appropriately set depending on dimensions of the cushioning sheet 100X, or the like. In addition, in the illustrated example, the protruding portions 121a, 121b are arranged alternately parallel or perpendicular to four side surfaces of the cushioning sheet 100, but the protruding portions 121a, 121b may also be configured to be arranged alternately diagonally to the above-mentioned four side surfaces.

Here, the protruding portion 121a protrudes toward the interposing member 210 and can be said to be a hollow protruding portion with the side opposite to the protruding direction being open. In addition, this protruding portion 121a protrudes toward an opposite side to the interposing member 220 and can be said to be a hollow protruding portion with a side near the interposing member 220 being open.

The protruding portion 121b protrudes toward the interposing member 220 and can be said to be a hollow protruding portion with the side opposite to the protruding direction being open. In addition, this protruding portion 121b protrudes toward an opposite side to the interposing member 210 and can be said to be a hollow protruding portion with a side near the interposing member 210 being open.

A dimensional relationship between the various parts of the battery cushioning structure 10X will be described with reference to Fig. 5. Fig. 5B illustrates dimensions of each part of the cushioning sheet 100X when no external force is applied. H is a maximum thickness of the cushioning sheet 100X in the protruding direction of the protruding portions, T1 is a thickness of the flat plate-shaped portion of the cushioning sheet 100X, and L is a distance between most distal portions of adjacent protruding portions 121a and 121b. These dimensions can be adjusted appropriately depending on the usage environment, or the like. For example, T1 can be set to about 0.1 mm to 10 mm. In order to fully exert a cushioning function, it is preferable to satisfy H > 3 × T1. Length and width (length and width when viewed in a plan view) of the cushioning sheet 100X may be equal to or slightly smaller than length and width of the cell 20. Density of the protruding portions 121a, 121b can be set to be about 1 to 6 pieces/cm².

When the battery cushioning structure 10X is compressed until the maximum thickness, in a state where no external force acting on the battery cushioning structure 10X, of the cushioning sheet 100X in the protruding direction of the protruding portion is halved, a back side of the most distal end of the protruding portion 121a does not come into contact with the interposing member 220, and a space is configured to be maintained between the protruding portion 121a and the interposing member 220, in this embodiment as well.

A specific example of how a space can be maintained behind the protruding portion even when the compression rate of the protruding portion is 50% will be described. The material adopted for the cushioning sheet 100X was EPDM having a hardness of Duro A75, an elongation of 250%, and a tensile strength of 6.8 MPa. The measurement conditions for each material property were the same as in the embodiment 1. The dimensions of each part were set as follows: H = 3.5 mm, T1 = 0.5 mm, and L = 3.5 mm. The interposing member 210 is a thin, non-combustible board having a thickness of 1.2 mm and a thermal conductivity of 0.2 W/mK, the main component of which is the non-asbestos natural mineral magnesium silicate. Fig. 5C is a graph illustrating a relationship between a compression rate of the protruding portions 121a, 121b and a surface pressure between the protruding portions 121a, 121b and the interposing members 210, 220 in this specific example. This graph was obtained by 3D nonlinear structural analysis, and the analysis conditions were set as follows: analysis element was a primary hexahedral element, temperature was room temperature, the material of the cushioning sheet was EPDM, and the material of the heat insulating member was non-combustible board. As can be seen from this graph, similarly to the embodiment 1, there is no sudden increase in surface pressure even when the compression rate exceeds 50%.

The battery cushioning structure 10X according to this embodiment configured as above can also provide the similar effects as those of the embodiment 1.

### (Others)

The outer shape of the protruding portion may be any shape other than the substantially truncated cone shape described in the embodiment 1 and the hemispherical shape described in the embodiment 2. In other words, the protruding portion may be configured so that the area enclosed by the outline of a cross section perpendicular to the protruding direction becomes gradually narrower toward the tip in the protruding direction. For example, as illustrated in Figs. 6A and 6B, a protruding portion 122 having a quadrangular pyramid-shaped tip formed of a curved surface may be adopted. Fig. 6A is a plan view of the protruding portion 122, and Fig. 6B is a side view thereof. The shape is not limited to a quadrangular pyramid, and a polygonal pyramid such as a triangular pyramid or a pentagonal pyramid with a curved tip may also be adopted. Also, as illustrated in Figs. 6C, 6D, and 6E, a protruding portion 123 having a shape like a cylinder cut in half may be adopted. Fig. 6C is a plan view of the protruding portion 123, Fig. 6D is a view of the protruding portion 123 viewed in a P1 direction in Fig. 6C, and Fig. 6E is a view of the protruding portion 123 viewed in a P2 direction. The inside of the protruding portions 122, 123 is hollow.

In the above-described embodiments, a configuration is described in which the protruding portions are provided on both sides of the cushioning sheet. However, the present invention also includes a configuration in which the protruding portions are provided on only one surface. In this case, a configuration may be adopted in which the interposing member is disposed only on a surface side on which the protruding portions are provided. As a result, the interposing member exhibits a stress dispersion function of dispersing stress caused by the protruding portion. Also, a configuration may be employed in which the interposing member is disposed only on a side opposite to the surface on which the protruding portions are provided. This makes it possible to prevent air from escaping from the hollow portion, so that even when the compression rate of the protruding portion is 50%, it becomes easier to maintain a space behind the protruding portion. As in each embodiment, it is desirable to provide an interposing member on each of both sides.

In the above-described embodiment, a configuration is described in which the protruding portions having the same dimension and shape are provided on both sides of the cushioning sheet. However, when protruding portions are provided on both sides of the cushioning sheet, it is not necessary that the protruding portions on both sides have the same dimension and shape. In other words, it is also possible to provide protruding portions of the same shape on both sides, with the protruding portions on one side having different heights from the protruding portions on the other side. Also, for example, the protruding portion described in the embodiment 1 can be adopted on one surface, and the protruding portion described in the embodiment 2 can be provided on the other surface, in which case the heights of the protruding portions may be the same or different.

In the above-described embodiments, the cushioning sheet and the interposing member (heat insulating member) are constructed from separate members, but the battery cushioning structure can also be constructed from a member that has, as an integral part, a portion corresponding to the cushioning sheet and a portion corresponding to the interposing member. In other words, the cushioning sheet and the interposing member (heat insulating member) can be configured to be integrated together.

### [Reference Signs List]

1 Battery
10, 10X Battery cushioning structure
20 Cell
30 Housing (support member)
100, 100X Cushioning sheet
120a, 120b, 121a, 121b, 122, 123 Protruding portion
210, 220 Interposing member

## Claims

1. A battery cushioning structure comprising:
a cushioning sheet; and
a heat insulating member disposed between the cushioning sheet and a battery component,
wherein the cushioning sheet includes a protruding portion that protrudes toward the heat insulating member.

2. A battery cushioning structure comprising:
a cushioning sheet; and
an interposing member,
wherein the cushioning sheet includes a protruding portion protruding toward the interposing member, and the interposing member has a stress dispersion function for dispersing stress caused by the protruding portion.

3. A battery cushioning structure comprising:
a cushioning sheet; and
an interposing member,
wherein the cushioning sheet includes a protruding portion protruding toward an opposite side to the interposing member, and
wherein, when the battery cushioning structure is compressed until a maximum thickness, in a state where no external force acts on the battery cushioning structure, of the cushioning sheet in a protruding direction of the protruding portion is halved, a back side of a most distal end of the protruding portion does not come into contact with the interposing member and a space is maintained between the protruding portion and the interposing member.

4. The battery cushioning structure according to claim 1, 2, or 3, wherein a plurality of the protruding portions are provided on each of both sides of the cushioning sheet.

5. The battery cushioning structure according to claim 4, wherein the protruding portions provided on one surface of the cushioning sheet and the protruding portions provided on the other surface of the cushioning sheet are arranged alternately in rows and columns.

6. The battery cushioning structure according to claim 4, wherein a height of the protruding portion provided on one surface of the cushioning sheet is the same as a height of the protruding portion provided on the other surface of the cushioning sheet.

7. The battery cushioning structure according to claim 4, wherein a maximum thickness of the cushioning sheet in a protruding direction of the protruding portion is more than three times a thickness of the cushioning sheet.

8. The battery cushioning structure according to claim 1, 2, or 3, wherein an area enclosed by outline of a cross section perpendicular to a protruding direction of the protruding portion becomes gradually narrower toward a tip in the protruding direction.

9. The battery cushioning structure according to claim 1, wherein the cushioning sheet and the heat insulating member are integrated together.

10. The battery cushioning structure according to claim 2 or 3, wherein the cushioning sheet and the interposing member are integrated together.
